(19) Europäisches Patentamt
European Patent Office
Office européen des brevets

(11) **EP 2 479 424 A1**

(12) **EUROPEAN PATENT APPLICATION**

(43) Date of publication:
25.07.2012 Bulletin 2012/30

(51) Int Cl.:
*F03D 3/06* (2006.01)        *F03D 3/00* (2006.01)
*F03D 9/00* (2006.01)

(21) Application number: 11075117.9

(22) Date of filing: 27.05.2011

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 15.12.2010 ES 201001467

(71) Applicant: **Ariznabarreta Garabieta, Joseba**
**20809 AIA Gipuzkoa (ES)**

(72) Inventor: **Ariznabarreta Garabieta, Joseba**
**20809 AIA Gipuzkoa (ES)**

(54) **Vertical axis micro wind generator**

(57)     A vertical axis micro wind generator is described, as comprising a Savonius type helical wing 1, (Figure 1), two bearings 10a and 10b on each side of the the wing, a base 2 joined to wing 1 with shafts 7a, 7b and 7c protruding from the bottom side of base 2 where 3 bearings 9a, 9b and 9c, and planets 8a, 8b and 8c are located, a crown gear fixed to base plate 6 and a sun gear 12 rotating around shaft 3. Sun gear 12, joined to the magnets plate 4, rotates in the same direction as helical wing 1 and at a resultant speed as determined by the planetary gear system (Figure 2).

FIG. 3

## Description

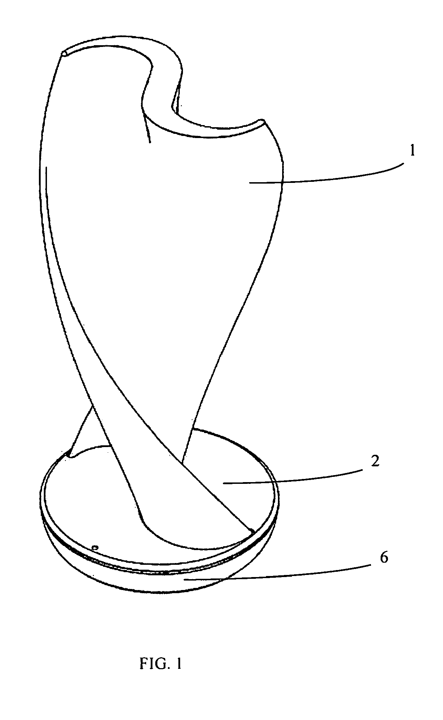

The invention refers to a vertical axis micro wind generator (Figure 1), of the type described in the 1st claim.

The specificity of the micro wind generator, for which a patent is applied for, lies in the use of a planetary gear system (Figure 2) located just below base 2 of wing 1 (Figure 3) that transmits an increased rotational speed from the wings to magnets plate 4, which, in turn, rotates over some magnet copper coils (Figure 4).

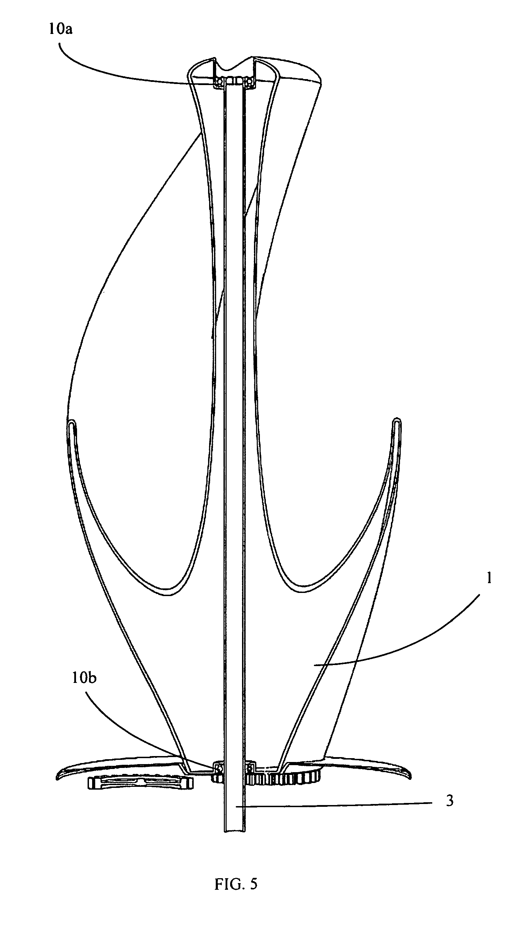

Base 2 is joined to wings 1. The rotation of wings 1 by the drag of the wind incides on base 2. This rotation takes place around vertical shaft 3 with the aid of two bearings 10a and 10b located on both sides of wing 1 (Figure 5). In base 2 there are three planet gear shafts 7a, 7b and 7c and, inserted in each one of them, there is a planet gear 8a, 8b and 8c respectively.

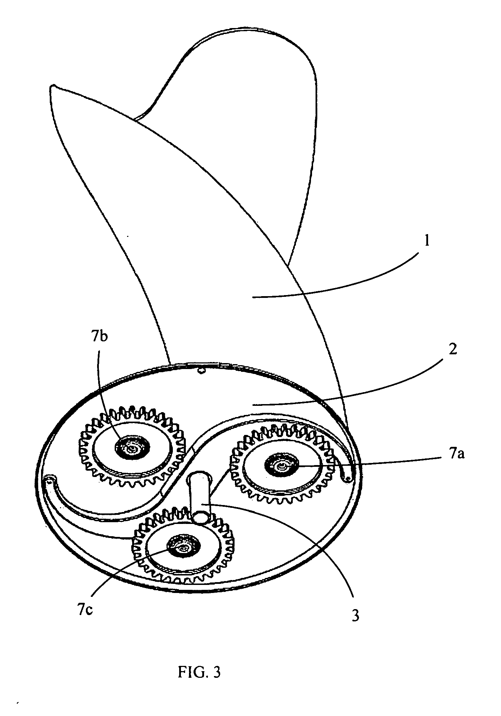

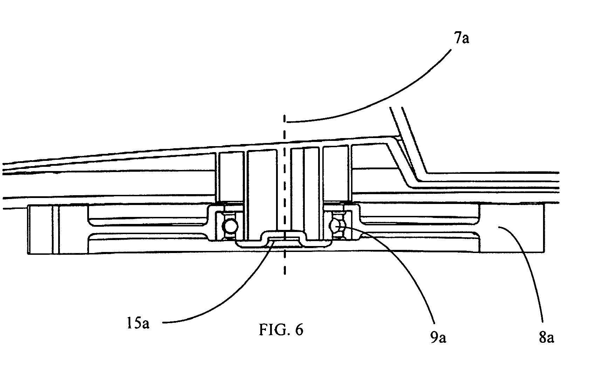

Planet bearings 8a, 8b and 8c rotate around shafts 7a, 7b and 7c, with the aid of some non-magnetic bearings 9a, 9b and 9c (Figure 3). Rings 15a,15b and 15c screwed to shafts 7a, 7b and 7c (Figure 6) retain planets 8a, 8b and 8c and bearings 9a, 9b and 9c secured.

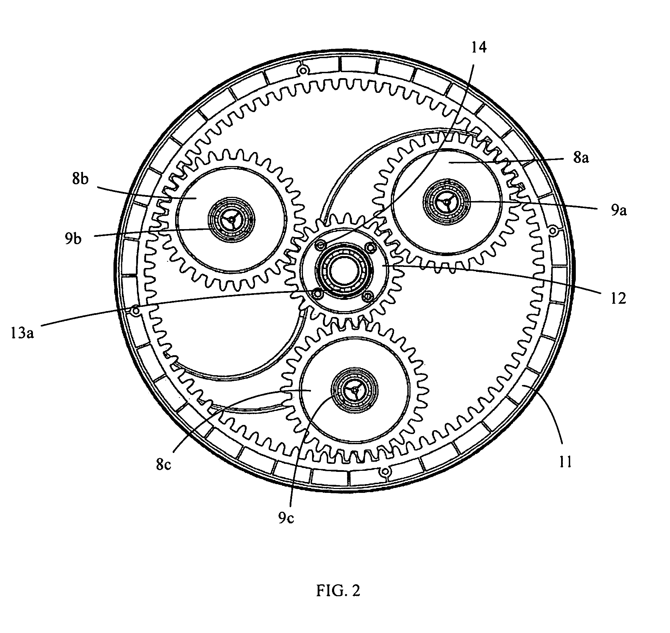

The planetary gear system (Figure 2) consists of a crown gear 11, planet gears 8a, 8b and 8c, and sun 12.

The configuration adopted in the micro wind generator concerned here is:

- fixed crown gear 11,
- rotational input in planet gears 8a, 8b and 8c -which rotate around shafts 7a, 7b and 7c, and shaft 3 simultaneously-,
- rotational output around shaft 3 through sun gear 12.

The rotational speed relation between input and output is determined by:

$$[\varnothing\ crown + \varnothing\ sun]/\varnothing\ sun$$

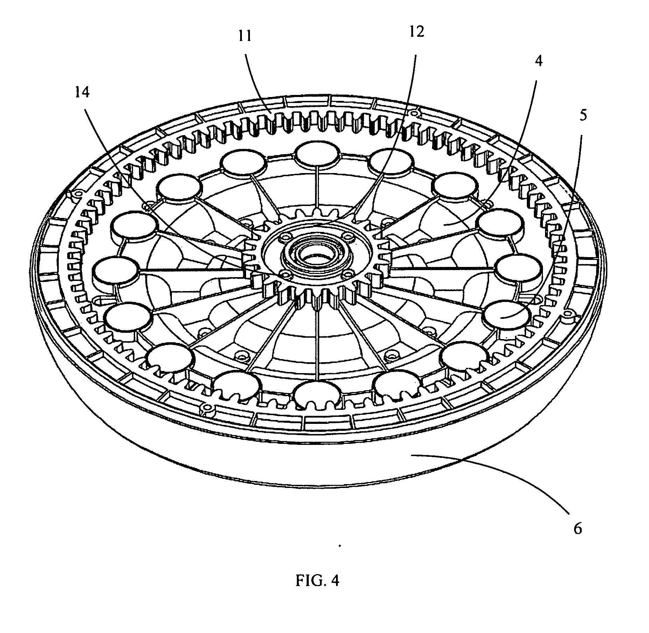

Sun 12, which rotates around shaft 3 with the aid of bearing 13a, is joined to the magnets plate 4 (Figure 4). Connection between plate 4 and sun 12 is made through holes 14, which enable such joining. Crown 11 is screwed to ground-fixed lower base 6 (Figure 4).

Sun 12 and magnets plate 4 rotate with the aid of bearings 13a and 13b, each located in a bore in sun 12 and bearing plate 4, respectively. Bearings 13a and 13b are screwed together and thus retained in place.

A nut screwed into the upper side of shaft 3 fixes the upper bearing 10a of wing 1, which ensures the correct placement of all components located in shaft 3

## Claims

1. A vertical axis wind generator (Figure 1), said wind generator comprising a helical wing 1, of the Savonius type, with bearings on both sides of wing 1, which rotates around shaft 3, a base 2 joined to wing 1, with shafts protruding from the bottom side of base 2, where bearings and gears are located, a crown gear 11 fixed to the lower base 6 and a sun gear 12 rotating around shaft 3, which make up the planetary gear system (Figure 2). Sun 12, joined to a magnet plate 4, rotate in the same direction as wing 1 and at a resultant speed as determined by the planetary gear system.

2. Micro wind generator according to claim 1, said wind generator comprising a Savonius type hollow helical blade manufactured by rotomoulding process.

3. Micro wind generator according to claim 1, said wind generator comprising planets that rotate around shafts protruding from bottom side of base 2, joined to wing 1 (Figure 3).

4. Micro wind generator according to claim 3, said wind generator comprising a sun 12 joined to magnets plate 4 and rotating around shaft 3.

5. Micro wind generator according to claim 4, said wind generator comprising shaft 3 fixed to base plate 6.

6. Micro wind generator according to claim 1, said wind generator comprising crown gear 11 (concentric to shaft 3) fixed to base plate 6.

FIG. 1

FIG. 2

FIG. 3

FIG. 4

10a

1

10b

3

FIG. 5

FIG. 6

Europäisches
Patentamt

European
Patent Office

Office européen
des brevets

**EUROPEAN SEARCH REPORT**

Application Number

EP 11 07 5117

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2007/258806 A1 (HART JAMES R [US]) 8 November 2007 (2007-11-08) * paragraph [0073] - paragraph [0088]; figures * ----- | 1-6 | INV. F03D3/06 F03D3/00 F03D9/00 |
| A | US 4 970 404 A (BARGER LLOYD D [US]) 13 November 1990 (1990-11-13) * column 2, line 14 - column 3, line 7; figures * ----- | 1-6 | |
| A | JP 2006 077753 A (MATSUZONO AKIHISA) 23 March 2006 (2006-03-23) * abstract; figures * ----- | 1-6 | |
| A | US 5 997 252 A (MILLER DUANE G [US]) 7 December 1999 (1999-12-07) * column 3, line 63 - column 5, line 7; figures * ----- | 1-6 | |
| A | US 2008/273977 A1 (BEARD JEFFREY R [US]) 6 November 2008 (2008-11-06) * figures * ----- | 1-6 | TECHNICAL FIELDS SEARCHED (IPC) F03D |

The present search report has been drawn up for all claims

| Place of search | Date of completion of the search | Examiner |
|---|---|---|
| Munich | 12 June 2012 | Di Renzo, Raffaele |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT**
**ON EUROPEAN PATENT APPLICATION NO.**

EP 11 07 5117

This annex lists the patent family members relating to the patent documents cited in the above-mentioned European search report.
The members are as contained in the European Patent Office EDP file on
The European Patent Office is in no way liable for these particulars which are merely given for the purpose of information.

12-06-2012

| Patent document cited in search report | | Publication date | Patent family member(s) | | Publication date |
|---|---|---|---|---|---|
| US 2007258806 | A1 | 08-11-2007 | NONE | | |
| US 4970404 | A | 13-11-1990 | NONE | | |
| JP 2006077753 | A | 23-03-2006 | NONE | | |
| US 5997252 | A | 07-12-1999 | NONE | | |
| US 2008273977 | A1 | 06-11-2008 | AU | 2005208711 A1 | 11-08-2005 |
| | | | BR | PI0507012 A | 05-06-2007 |
| | | | CA | 2555277 A1 | 11-08-2005 |
| | | | CN | 1926330 A | 07-03-2007 |
| | | | EA | 200601331 A1 | 29-12-2006 |
| | | | EP | 1714028 A2 | 25-10-2006 |
| | | | KR | 20060126784 A | 08-12-2006 |
| | | | US | 2008273977 A1 | 06-11-2008 |
| | | | WO | 2005072184 A2 | 11-08-2005 |

EPO FORM P0459